Europäisches Patentamt

(19) European Patent Office

Office européen des brevets

(11) EP 0 589 537 B1

(12) **EUROPEAN PATENT SPECIFICATION**

(45) Date of publication and mention
of the grant of the patent:
**12.03.1997 Bulletin 1997/11**

(51) Int. Cl.$^6$: **A01C 3/02**, A01K 31/04

(21) Application number: **93202751.9**

(22) Date of filing: **24.09.1993**

(54) **Method and device for increasing the dry matter content of manure by storing stackable manure, in particular poultry manure**

Verfahren und Vorrichtung, um die Trockensubstanz in Mist zu steigern, insbesondere in Hühnermist

Méthode et appareil pour augmenter la matière sèche de fumier par stockage en particulier fumier de poule

(84) Designated Contracting States:
**AT BE CH DE DK ES FR GB GR IE IT LI LU MC NL PT SE**

(30) Priority: **25.09.1992 NL 9201666**

(43) Date of publication of application:
**30.03.1994 Bulletin 1994/13**

(73) Proprietor: **STICHTING INSTITUUT VOOR MECHANISATIE ARBEID EN GEBOUWEN NL-6700 AA Wageningen (NL)**

(72) Inventor: **Kroodsma, Willem NL-3911 MP Rhenen (NL)**

(74) Representative: **de Bruijn, Leendert C. et al Nederlandsch Octrooibureau P.O. Box 29720 2502 LS Den Haag (NL)**

(56) References cited:
CH-A- 121 822          DE-B- 1 128 209
NL-A- 8 901 220        NL-A- 9 200 763

## Description

The invention relates to a method for increasing the dry matter content of manure by storing stackable manure, in particular poultry manure, which manure is stored in at least one essentially sealed, roofed chamber having cavity walls, of which the inner walls are gas-permeable, stable air or outside air being admitted to the cavity.

Such a method is known from CH-A-121,822.

Poultry manure is normally stored in a barn ventilated by the wind. During storage, the dry matter content increases considerably as a result of heating (to more than 70%), ammonia, smell and moisture which are blown into the environment being released. This is bad for the environment and can result in odour nuisance.

The object of the method according to CH-A-121,822 is to promote the heating by supplying air and collect the liquid produced during the fermentation and drain it into a pit. In this process, it will only partly be possible to prevent the emission of ammonia and moisture into the environment since the gases which are harmful to the environment are not bound and converted.

The object of the invention is to eliminate this drawback and to provide a method specified in the introduction with which the gases produced by heating in a relatively cheap, closed chamber with uninsulated walls are effectively removed and are subjected to a wash treatment in order to remove and convert substances harmful to the environment.

According to the invention, the method mentioned in the introduction is characterized for this purpose in that, in the chamber mentioned, a controlled amount of ventilation air is passed over the manure at least partly via the cavity, in that a mixture of essentially ammonia smell and water vapour, produced in the chamber by heating, penetrates at least partly via the inner walls into the cavity and is removed from the chamber with said ventilation air and is converted into liquid aqueous ammonia in a chemical scrubber, the pH being kept at a value lower than 6 by metered addition of acid, and in that condensed water formed by condensation on the uninsulated outer walls and fed into the cavity by dripping from the uninsulated sloping roof is drained therefrom.

By making use of cavity walls and using no insulated walls, the condensed moisture can be efficiently removed without attacking the structure of the building.

The ventilation flow rate can be adjusted to the amount of manure supplied and the quality (dry matter content) of said manure.

Depending on the dry matter content of the manure, the condensed water formed in, and fed into, the cavity could be sprayed at least partly over the stacked manure. The same applies to the ammonia-containing liquid of the scrubber.

As a result of heating, the dry matter content increases owing to the evaporation of moisture and ammonia from, for example, about 45% to more than 70%. The filling of the chamber with manure does not normally take place all at once but in layers. If a poultry keeper were to work with a single manure storage chamber, a large amount of ammonia which would disappear into the environment via the open doors of the chamber would be released on removing the manure, and a considerable amount of ventilation would have to be carried out to be able to perform the operations. The capacity of the scrubber is not designed for such a large emission of ammonia. It is therefore preferable that a number of closed storage chambers are used in such a manner that, while the dry matter content can increase to more than 70% by heating in one or more filled chambers, one or more other chambers are being partly filled.

The invention also relates to a device for carrying out the method according to the invention, comprising at least one essentially closed, roofed chamber having cavity walls, of which the inner walls are gas-permeable and means for admitting stable air or outside air to the cavity.

The device is characterized by means for admitting a controlled amount of ventilation air into the space above the manure at least partly via the cavity, means for removing the mixture, produced by heating and collecting in the space above the manure, of essentially ammonia smell and water vapour, along with the ventilation air, to a chemical scrubber in order to convert ammonia into liquid aqueous ammonia, means for metering acid into the scrubber and means for draining the condensed water present in the cavity.

The sloping, uninsulated roof of the chamber may have a drip edge for condensation above the cavity. Building materials and structural parts are chosen and treated in such a way that they are not attacked or hardly attacked by water vapour and gases originating from the manure.

The invention will now be explained in greater detail by reference to the figures.

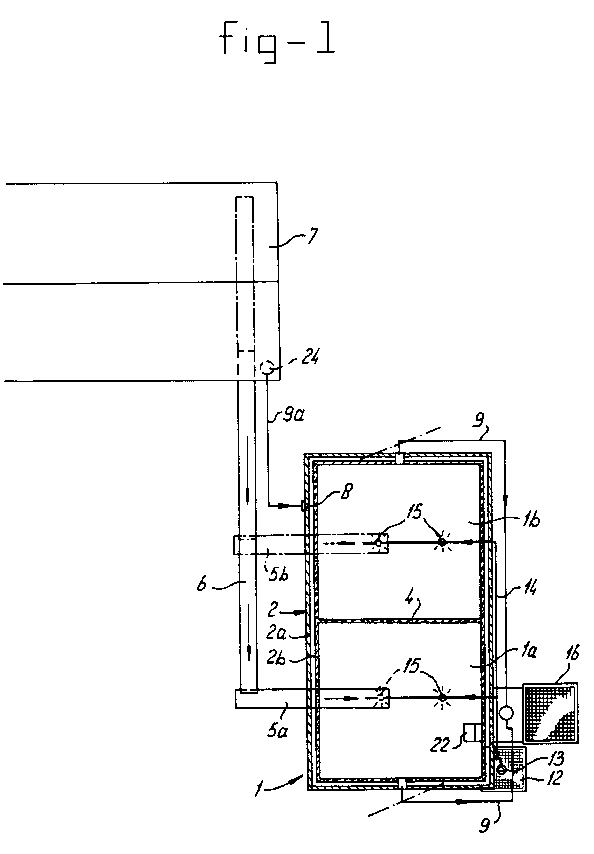

Figure 1 shows a plan view of a device suitable for carrying out the method according to the invention.

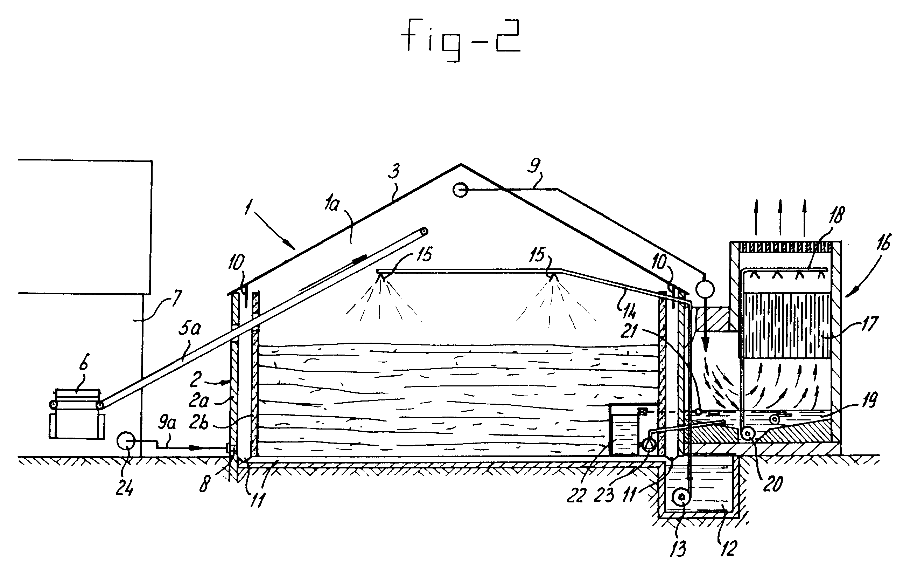

Figure 2 shows a section.

The storage device shown for stackable manure comprises an essentially closed building 1 having cavity walls 2 and a sloping, uninsulated roof 3. The chamber is divided into two compartments 1a and 1b by a partition 4. To feed fresh stackable manure into the compartments, use is made of loading elevators 5a and 5b, which are supplied by a conveyor 6 which extends out of a poultry shed 7.

The cavity walls comprise an uninsulated, impermeable outer wall 2a and a ventilating gas-permeable inner wall 2b, of which at least the lowermost section is adequately resistant to the pressure of a stack of manure. Via the cavity 8, ventilation air is fed into the chamber 1 by means of air supply lines 9a in a controlled manner. For each tonne of manure, the air supply is, for example, 50 to 200 $m^3$ per hour. The chosen amount of air per tonne of manure is dependent on the quality (dry matter content) of the manure.

The manure is provided in layers, heating takes place in the manure, as a result of which water vapour and ammonia are released and these are fed out of the chamber via the ventilation outlet 9 together with the air removed. The consequence is that the dry matter content of the manure increases to more than 70%. This manure is used for environmentally friendly fertilization of soil.

The hot gases produced during the heating penetrate into the cavity 8 partly via the inner wall 2b. Condensation of moisture takes place on the uninsulated outer wall 2a. The condensed water formed on the uninsulated sloping roof 3 can also be fed into the cavity 8 via drip edges 10.

The contaminated condensed water in the cavity 8 is fed via channels 11 to a collecting pit 12 and can be sprayed over the stored manure by means of a pump 13, a line 14 and spray heads 15. As a result of this controlled treatment of condensation, no drainage, or a small amount of drainage, of the water contaminated with ammonia will be necessary.

The heavily contaminated outlet gases are fed via the outlet 9 to a chemical scrubber 16 which serves to scrub ammonia out of the outlet gases. Said scrubber contains a column of packed material 17 having a spraying device 18 above it and a liquid collection tank 19 below it, which contains scrubbing liquid with, for example, dilute sulphuric acid. Scrubbing liquid can be conveyed from the tank 19 to a spraying device 18 by means of a circulating pump 20. The sprayed liquid trickles downwards through the column 17 in which process the gaseous ammonia is transferred to the liquid phase and flows back into the tank 19. In this process the following reactions take place:

$$NH_3(gas) \leftrightharpoons NH_3(water)$$

$$NH_3(water) + H_2O \leftrightharpoons NH_4^+ + OH^-$$

$$NH_4OH + H_2SO_4 \leftrightharpoons NH_4SO_4 + H_2O$$

It is advisable to site the chemical scrubber in a sealed insulated chamber in the shed. Siting the scrubber in the chamber heated by the manure will limit the formation of condensation in the scrubber (as small a drain as possible).

If no acid is added, the pH will become too high. That is why the pH is measured with the aid of a pH electrode 21 and, for example, sulphuric acid can be added to the tank 19 from a tank 22 by means of a pump 23. The acid store and the acid pump 23 may be integrated in the chemical scrubber. Water may be added with the aid of a float regulating system. Occasionally the tank 19 is so contaminated that at least a part of it has to be drained and clean water has to be added. The chemical scrubber may be provided with an apparatus which measures the concentration of contaminants in the scrubbing water and automatically performs the partial drainage of scrubbing water. The concentrated drainage water could be sprayed over the stacked manure.

Because the chamber is divided into compartments 1a and 1b, a manure filling can be allowed to compost completely in one compartment and the other compartment can be filled in the meantime. When manure is removed, little nuisance due to ammonia and water vapour will then be experienced. It may be advantageous, especially in winter, to preheat the ventilation air to be fed to the cavities of the walls of the building 1 with the aid of a heat exchanger 24 in the shed 6.

The most important advantages of the method and device described are that the ammonia gas produced by heating is not emitted or hardly emitted into the environment, that the chamber in which heating takes place has uninsulated cavity walls and an uninsulated sloping roof and can therefore be comparatively cheap, and that condensation and drainage water collected can still be evaporated completely or partly via the heated manure in a low-emission manner.

## Claims

1. Process for increasing the dry matter content of manure by storing stackable manure, in particular poultry manure, which manure is stored in at least one essentially closed, roofed chamber (1) having cavity walls (2), of which the inner walls (2b) are gas-permeable, stable or outside air being admitted to the cavity (8), characterized in that, in the chamber (1) mentioned, a controlled amount of ventilation air is passed over the manure at least partly via the cavity (8), in that a mixture of essentially ammonia, smell and water vapour, produced in the chamber by heating, penetrates at least partly via the inner walls (2b) into the cavity (8) and is removed from the chamber with said ventilation air and is converted into liquid aqueous ammonia in a chemical scrubber (16), the pH being kept at a value lower than 6 by metered addition of acid, and in that condensed water formed by condensation on the uninsulated outer walls (2a) and fed into the cavity (8) by dripping from the uninsulated sloping roof (3) is drained therefrom.

2. Process according to claim 1, characterized in that the condensed water formed in, and fed into the cavity is at least partly sprayed over the stacked manure.

3. Process according to claim 1 or 2, characterized in that the ammonia-containing liquid from the chemical scrubber (16) is sprayed over the stacked manure.

4. Process according to one of the preceding claims, characterized in that a number of closed storage chambers (1) are used in such a way that, while the dry matter content increases as a result of heating to a value above 70% in one or more filled chambers, one or more other chambers (1) are being filled.

5. Apparatus for carrying out the process according to claim 1, comprising at least one essentially closed, roofed chamber (1) having cavity walls (2), of which the inner walls (2b) are gas-permeable, and means for admitting stable or outside air to the cavity (8), characterized by means (9a) for admitting a controlled amount of ventilation air into the space above the manure at least partly via the cavity (8), means for removing the mixture of essentially ammonia, smell and water vapour, produced by heating and collecting in the space above the manure, along with the ventilation air, to a chemical scrubber (16) in order to convert ammonia into liquid aqueous ammonia, means for metering acid into the scrubber, and means (11) for draining the condensed water present in the cavity.

6. Apparatus according to claim 5, characterized by means (13, 14, 15) for spraying condensed water formed in, or fed into, the cavity (8) at least partly over the manure.

7. Apparatus according to one of claims 5 and 6, characterized by means for spraying the ammonia-containing liquid from the scrubber (16) over the manure.

**Patentansprüche**

1. Verfahren zum Steigern des Trockensubstanzgehaltes von Dung durch Speichern stapelbaren Dungs, insbesondere Geflügelmist, wobei der Dung mindestens in einer im wesentlichen geschlossenen, bedachten Kammer (1) gespeichert wird, die Hohlraumwände (2) aufweist, von denen die inneren Wände (2b) gasdurchlässig sind, wobei Stall- oder Außenluft in den Hohlraum (8) eingelassen wird, dadurch gekennzeichnet, daß in der erwähnten Kammer (1) eine kontrollierte Menge an Ventilationsluft über den Dung, mindestens teilweise durch den Hohlraum (8) geleitet wird; daß eine Mischung aus im wesentlichen Ammoniak, Geruchstoffen und Wasserdampf, die in der Kammer durch Erwärmung erzeugt wird, mindestens teilweise durch die inneren Wände (2b) in den Hohlraum (8) eindringt und aus der Kammer mit Hilfe der genannten Ventilationsluft entfernt und in einem chemischen Reiniger (16) in flüssiges, wäßriges Ammoniak umgewandelt wird, wobei der pH-Wert durch dosiertes Hinzufügen von Säure auf einem Wert unter 6 gehalten wird; und daß kondensiertes Wasser, das durch Kondensation auf den nichtisolierten Außenwänden (2a) gebildet und in den Hohlraum (8) gespeist wird, durch Abtropfen von dem nichtisolierten geneigten Dach (3) abgeführt wird.

2. Verfahren nach Anspruch 1, dadurch gekennzeichnet, daß das kondensierte Wasser, das im Hohlraum gebildet und in denselben gespeist wird, mindestens teilweise über den gestapelten Dung gesprüht wird.

3. Verfahren nach Anspruch 1 oder 2, dadurch gekennzeichnet, daß die Ammoniak enthaltende Flüssigkeit vom chemischen Reiniger (16) über den gestapelten Dung gesprüht wird.

4. Verfahren nach einem der vorhergehenden Ansprüche, dadurch gekennzeichnet, daß eine Anzahl geschlossener Speicherkammern (1) in der Weise benutzt wird, daß während der Zeit, in der der Trockensubstanzgehalt als Ergebnis der Erwärmung auf einen Wert über 70% in einer oder mehreren gefüllten Kammern gesteigert wird, eine oder mehrere Kammern (1) gefüllt werden.

5. Anlage zur Durchführung des Verfahrens gemäß Anspruch 1, die mindestens eine im wesentlichen geschlossene, bedachte Kammer (1) umfaßt, die Hohlraumwände (2) aufweist, von denen die inneren Wände (2b) gasdurchlässig sind, und die Einrichtungen zum Einlassen von Stall- oder Außenluft in den Hohlraum (8) aufweist, gekennzeichnet durch Einrichtungen (9a) zum Einlassen einer kontrollierten Menge an Ventilationsluft, teilweise durch den Hohlraum (8), in den Raum über dem Dung; Einrichtungen zum Entfernen der Mischung aus im wesentlichen Ammoniak, Geruchstoffen und Wasserdampf, die durch Erwärmung und Sammeln im Raum über dein Dung erzeugt worden ist, zusammen mit der Ventilationsluft in einen chemischen Reiniger (16), um das Ammoniak in flüssiges, wäßriges Ammoniak umzuwandeln; Einrichtungen zum Dosieren von Säure in den Reiniger; und Einrichtungen (11) zum Abziehen des im Hohlraum vorhandenen kondensierten Wassers.

6. Anlage nach Anspruch 5, gekennzeichnet durch Einrichtungen (13, 14, 15) zum Sprühen von im Hohlraum (8) gebildeten oder ihm zugeführten kondensierten Wassers mindestens teilweise über den Dung.

7. Anlage nach Anspruch 5 oder 6, gekennzeichnet durch Einrichtungen zum Sprühen der Ammoniak enthaltenden Flüssigkeit aus dem Reiniger (16) über den Dung.

**Revendications**

1. Procédé pour augmenter la teneur en matière sèche du fumier en stockant du fumier pouvant être mis en tas, en particulier du fumier de volaille, lequel fumier est stocké dans au moins une chambre couverte (1), sensiblement fermée, ayant des murs creux (2) dont les parois intérieures (2b) sont perméables aux gaz, de l'air extérieur ou stable étant admis dans la cavité (8), caractérise en ce que, dans la chambre (1) mentionnée, une quantité commandée d'air de ventilation est passée sur le fumier au moins partiellement par l'intermédiaire de la cavité (8), en ce qu'un mélange principalement de gaz ammoniac, d'odeur et de vapeur d'eau, produit dans la chambre par chauffage, pénètre au moins partiellement par les parois intérieures (2b) dans la cavité (8) et est retiré de la chambre avec ledit air de ventilation et est transformé en un gaz ammoniac aqueux liquide dans un épurateur chimique (16), le pH étant conservé à une valeur inférieure à 6 par l'ajout mesuré d'acide, et en ce que de l'eau condensée, formée par condensation sur les parois extérieures non isolées (2a), et délivrée dans la cavité (8) en tombant goutte a goutte à partir du toit en pente non isolé (3), est drainée à partir de ce dernier.

2. Procédé selon la revendication 1, caractérisé en ce que l'eau condensée formée et délivrée dans la cavité est au moins partiellement pulvérisée sur le fumier en tas.

3. Procédé selon la revendication 1 ou 2, caractérisé en ce que le liquide contenant du gaz ammoniac, en provenance de l'épurateur chimique (16), est pulvérisé sur le fumier en tas.

4. Procédé selon l'une des revendications précédentes, caractérisé en ce qu'un certain nombre de chambres de stockage fermées (1) sont utilisées de sorte que, tandis que la teneur en matière sèche augmente, comme conséquence d'un chauffage, à une valeur supérieure à 70 % dans une ou plusieurs chambres remplies, une ou plusieurs autres chambres (1) sont en train d'être remplies.

5. Appareil pour exécuter le Procédé selon la revendication 1, comprenant au moins une chambre couverte (1), sensiblement fermée, ayant des murs creux (2) dont les parois intérieures (2b) sont perméables aux gaz, et des moyens pour admettre de l'air extérieur ou stable dans la cavité (8), caractérisé par des moyens (9a) pour admettre une quantité commandée d'air de ventilation dans l'espace au-dessus du fumier, au moins partiellement par l'intermédiaire de la cavité (8), des moyens pour retirer le mélange principalement de gaz ammoniac, d'odeur et de vapeur d'eau, produit par chauffage et se rassemblant dans l'espace au-dessus du fumier, en même temps que de l'air de ventilation, vers un épurateur chimique (16) afin de transformer le gaz ammoniac en un gaz ammoniac aqueux liquide, des moyens pour mesurer l'acide dans l'épurateur et des moyens (11) pour drainer l'eau condensée présente dans la cavité.

6. Appareil selon la revendication 5, caractérisé par des moyens (13, 14, 15) pour pulvériser l'eau condensée formée ou délivrée dans la cavité (8) au moins partiellement au-dessus du fumier.

7. Appareil selon l'une des revendications 5 et 6, caractérisé par des moyens pour pulvériser le liquide contenant du gaz ammoniac, en provenance de l'épurateur (16), au-dessus du fumier.

fig-1

fig-2